(19) Europäisches Patentamt
European Patent Office
Office européen des brevets

(11) **EP 3 037 168 A1**

(12) **EUROPEAN PATENT APPLICATION**
published in accordance with Art. 153(4) EPC

(43) Date of publication:
**29.06.2016 Bulletin 2016/26**

(51) Int Cl.:
*B01J 35/04* (2006.01)      *B01D 39/20* (2006.01)
*B01D 53/86* (2006.01)      *B01D 53/94* (2006.01)
*B01J 23/42* (2006.01)      *F01N 3/022* (2006.01)
*F01N 3/023* (2006.01)      *F01N 3/035* (2006.01)
*F01N 3/28* (2006.01)

(21) Application number: **14837150.3**

(22) Date of filing: **20.08.2014**

(86) International application number:
**PCT/JP2014/071780**

(87) International publication number:
**WO 2015/025890 (26.02.2015 Gazette 2015/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **23.08.2013  JP 2013173881**

(71) Applicant: **Sumitomo Chemical Company, Limited Tokyo 104-8260 (JP)**

(72) Inventors:
• **ANO, Yusuke**
  **Niihama-shi**
  **Ehime 792-8521 (JP)**
• **YAMANISHI, Osamu**
  **Niihama-shi**
  **Ehime 792-8521 (JP)**

(74) Representative: **Vossius & Partner Patentanwälte Rechtsanwälte mbB Siebertstrasse 3 81675 München (DE)**

(54) **PARTICULATE FILTER**

(57)     A particulate filter 200 comprises: a columnar ceramic honeycomb structure 220 having a plurality of first channels 210a and a plurality of second channels 210b; and a catalyst component carried by the ceramic honeycomb structure 220. The catalyst component contains noble metal particulates, and the following expression is satisfied: $2 \text{ m}^2/\text{L} \leq \text{SPout} - \text{SPcent} \leq 125 \text{ m}^2/\text{L}$, where SPcent represents the total surface area of the noble metal particulates contained in an apparent unit volume of a central portion 220c of the ceramic honeycomb structure 220, and SPout represents the total surface area of the noble metal particulates contained in the apparent unit volume of a peripheral portion 220p of the ceramic honeycomb structure 220.

**Fig.1**

(a)

(b)

**Description**

**Technical Field**

The present invention relates to a particulate filter.

**Background Art**

A particulate filter is used as a ceramic filter that removes soot from a soot-containing fluid, for example, used as an exhaust gas filter for cleaning exhaust gas exhausted from a diesel engine, a gasoline engine, and other internal combustion engines. Such a particulate filter has a plurality of inlet-side channels and outlet-side channels that are separated by porous partition walls and parallel to each other (see Patent Literature 1 described below, for example).

**Citation List**

**Patent Literature**

Patent Literature 1: Japanese Unexamined Patent Publication No. 2009-537741

**Summary of Invention**

**Technical Problem**

As a soot-containing fluid is supplied into a particulate filter, the soot is deposited on the surface of partition walls and inside the partition walls in the particulate filter. In this case, when the soot is excessively deposited in the particulate filter, the deposited soot prevents movement of the fluid in the particulate filter, resulting in an increase in loss of the pressure in the particulate filter and hence a decrease in fuel efficiency. To avoid such a situation, after a fixed amount of soot is deposited in the particulate filter, what is called filter regeneration, in which soot is burned and removed, is performed.

In the filter regeneration, the soot in a central portion of the filter is more likely to be burned than the soot in a peripheral portion of the filter, so that the soot in the peripheral portion is left in some cases. The non-uniformity in the soot burning causes a large difference in temperature between the central portion and the peripheral portion, resulting in cracking of the filter in some cases.

The present invention has been made in view of the circumferences described above, and an object of the present invention is to provide a particulate filter that allows suppression of non-uniformity in soot burning between the central portion and the peripheral portion in the regeneration.

**Solution to Problem**

A particulate filter according to the present invention comprises: a columnar ceramic honeycomb structure having a plurality of first channels and a plurality of second channels; and a catalyst component carried by the ceramic honeycomb structure. The plurality of first channels extend in an axial direction of the ceramic honeycomb structure, are open through one end surface of the ceramic honeycomb structure and are closed at another end surface thereof, and the plurality of second channels extend in the axial direction of the ceramic honeycomb structure, are open through the other end surface and are closed at the one end surface. The catalyst component contains noble metal particulates, and the following expression is satisfied: $2 \text{ m}^2/\text{L} \leq \text{SPout} - \text{SPcent} \leq 125 \text{ m}^2/\text{L}$, where SPcent represents a total surface area of the noble metal particulates contained in an apparent unit volume of a central portion of the ceramic honeycomb structure, and SPout represents the total surface area of the noble metal particulates contained in the apparent unit volume of a peripheral portion of the ceramic honeycomb structure.

According to the present invention, since an appropriate difference in the total surface area of the noble metal particulates is provided between the central portion and the peripheral portion of the ceramic honeycomb structure, soot burning is appropriately facilitated by the noble metal particulates in the peripheral portion, where soot is unlikely to be burned, as compared with in the central portion, whereby non-uniformity in soot burning between the central portion and the peripheral portion is suppressed.

It is preferable that the catalyst component further contains a solid acid component, and the following expression is satisfied: $1.0 \text{ mmol/L} \leq \text{SAout} - \text{SAcent} \leq 12.0 \text{ mmol/L}$, where SAcent represents an amount of solid acid contained in the apparent unit volume of the central portion of the ceramic honeycomb structure, and SAout represents the amount of solid acid contained in the apparent unit volume of the peripheral portion of the ceramic honeycomb structure.

Since the configuration described above allows the solid acid component in the peripheral portion to adsorb and burn hydrocarbon supplied in the regeneration by a greater amount than in the central portion, whereby the non-uniformity in the soot burning can be further suppressed.

It is preferable that the ceramic honeycomb structure is primarily made of an aluminum titanate, and that the solid acid component is primarily made of alumina.

It is preferable that a thermal conductivity of the ceramic honeycomb structure is less than or equal to 3 W/mK, and that a heat capacity of the ceramic honeycomb structure is greater than or equal to 0.75 J/gK.

It is preferable that each of the first channels has a hexagonal cross section.

It is preferable that a cross-sectional area of each of the first channels is smaller than the cross-sectional area of each of the second channels.

### Advantageous Effects of Invention

According to the present invention, a particulate filter that allows suppression of non-uniformity in soot burning between the central portion and the peripheral portion in the regeneration is provided.

### Brief Description of Drawings

[Figure 1] Figure 1(a) diagrammatically shows a diesel particulate filter 200 according to a first embodiment, and Figure 1(b) is an enlarged view of a region R2 in Figure 1(a).

[Figure 2] Figure 2(a) is an enlarged view of an end surface of the diesel particulate filter 200 shown in Figure 1(a) on the side opposite the side shown in Figure 1(b), and Figure 2(b) is an enlarged view of the cross section of a partition wall.

[Figure 3] Figure 3 is a cross-sectional view taken along the line III-III in Figure 1(a) and viewed along the arrows.

[Figure 4] Figure 4(a) diagrammatically shows a diesel particulate filter 200 according to a second embodiment, and Figure 4(b) is an enlarged view of a region R1 in Figure 4(a).

[Figure 5] Figure 5(a) is an enlarged view of an end surface of the diesel particulate filter 200 shown in Figure 4(a) on the side opposite the side shown in Figure 4(b), and Figure 5(b) is an enlarged view of the cross section of a partition wall.

[Figure 6] Figure 6 is a cross-sectional view taken along the line VI-VI in Figure 4 and viewed along the arrows.

[Figure 7] Figure 7 is a perspective view for describing a central portion 220c and a peripheral portion 220p of a ceramic honeycomb structure 220.

### Description of Embodiments

<Diesel particulate filter>

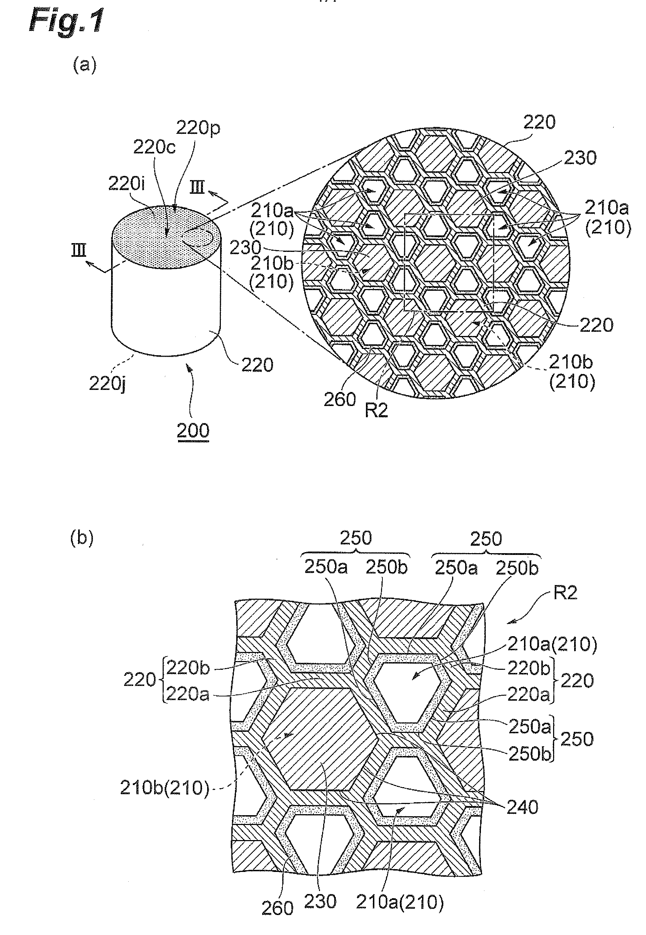

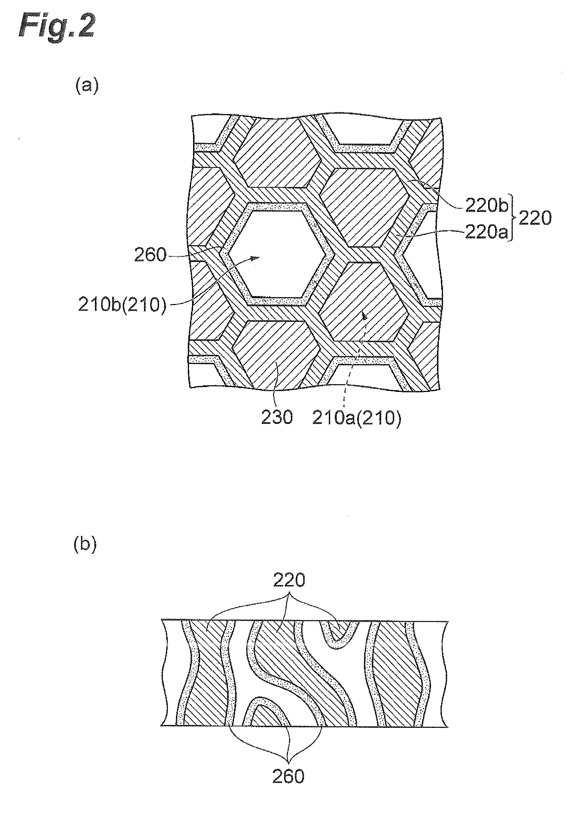

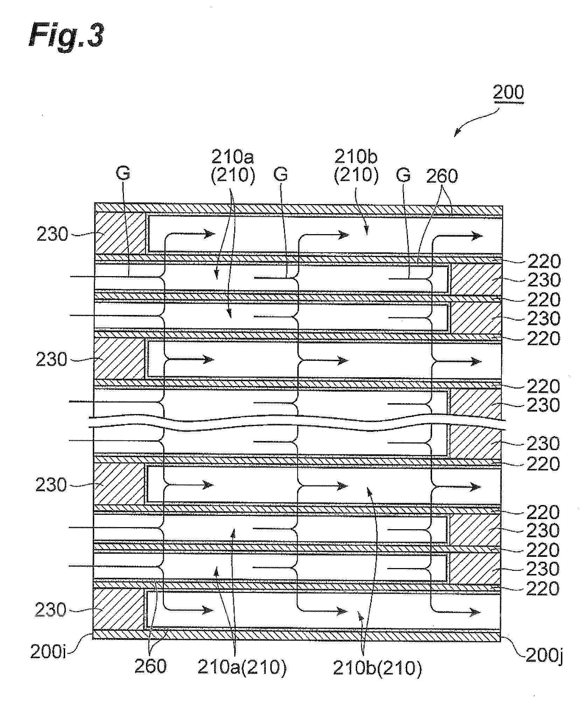

Figure 1(a) diagrammatically shows a diesel particulate filter 200 according to a first embodiment, and Figure 1(b) is an enlarged view of a region R2 in Figure 1(a). Figure 2(a) is an enlarged view of an end surface of the diesel particulate filter 200 shown in Figure 1(a) on the side opposite the side shown in Figure 1(b), and Figure 2(b) is an enlarged view of the cross section of a partition wall. Figure 3 is a cross-sectional view taken along the line III-III in Figure 1(a) and viewed along the arrows. The diesel particulate filter 200 includes a ceramic honeycomb structure 220, which has an end surface on one side (one end surface) 220i, and an end surface on the other side (other end surface) 220j, which is located on the side opposite the end surface 220i; and catalyst layers 260, which are carried by the ceramic honeycomb structure 220.

The ceramic honeycomb structure 220 is a circular columnar body having a partition wall structure that forms a plurality of channels 210 extending in parallel to each other. The plurality of channels 210 have a plurality of channels (first channels) 210a and a plurality of channels (second channels) 210b, which are adjacent to the channels 210a. The channels 210a and 210b are perpendicular to the end surfaces 220i and 220j and extend from the end surface 220i to the end surface 220j.

One end of each of the channels 210a, which form part of the channels 210, is open through the end surface 220i, and the other end of each of the channels 210a is closed by a closing portion 230 at the end surface 220j. One end of each of the channels 210b, which form the remainder of the plurality of channels 210, is closed by a closing portion 230 at the end surface 220i, and the other end of each of the channels 210b is open through the end surface 220j. In the ceramic honeycomb structure 220, for example, the end of each of the channels 210a at the end surface 220i is open as a gas inlet, and the end of each of the channels 210b at the end surface 220j is open as a gas outlet.

Each of the channels 210a and the channels 210b has a hexagonal cross section perpendicular to the axial direction of the channel. The cross section of a channel 210b has, for example, a regular hexagonal shape having sides 240, which form the cross section and are roughly equal to each other in length, but may instead have a shallow hexagonal shape. The cross section of a channel 210a has, for example, a shallow hexagonal shape but may instead have a regular hexagonal shape. The sides of the cross section of a channel 210a that face each other have lengths different from each other. The cross section of a channel 210a has sides 250, which form the cross-section and are formed of three long sides 250a, which are roughly equal to each other in length, and three short sides 250b, which are roughly equal to each other in length. The long sides 250a and the short sides 250b face, in parallel to, each other, and the short sides 250b are arranged on both sides of the long sides 250a.

The ceramic honeycomb structure 220 has partition walls 220a, as portions which separate the channels 210a and the channels 210b. That is, the channels 210a and the channels 210b are adjacent to each other via the partition walls 220a. Between channels 210b adjacent to each other are arranged two channels 210a adjacent to each other in a direction roughly perpendicular to the arraignment direction of the adjacent channels 210b, and the adjacent channels 210a are arranged symmetrically with respect to the line connecting the centers of the cross sections of channels 210b adjacent to each other.

Each of the sides 240 of a channel 210b faces, in parallel to, one of the long sides 250a of one of the plurality of channels 210a. That is, each of the wall surfaces that form a channel 210b faces, in parallel to, one wall surface that forms a channel 210a along the partition wall 220a located between the channel 210a and the channel 210b. The channels 210 have a configuration unit including one channel 210b and six channels 210a that surround the channel 210b, and in the configuration unit, all the sides 240 of the channel 210b face long sides 250a of the channels 210a. Each of the vertices of the cross section of the channel 210b faces vertices of adjacent channels 210b in the direction in which the channels 210b are arranged. In the ceramic honeycomb structure 220, the length of at least one of the sides 240 of a channel 210b may be roughly equal to the length of the opposing long side 250a, or the length of each of the sides 240 may be roughly equal to the length of the opposing long side 250a.

The ceramic honeycomb structure 220 has a partition wall 220b, which separates the channels 210a adjacent to each other. That is, the channels 210a that surround a channel 210b are adjacent to each other via the partition walls 220b.

Each of the short sides 250b of a channel 210a faces, in parallel to, a short side 250b of the adjacent channel 210a. That is, wall surfaces that form the channels 210a face, in parallel to, each other along the partition walls 220b located between channels 210a adjacent to each other. One channel 210a is surrounded by three channels 210b. In the ceramic honeycomb structure 220, between the channels 210a adjacent to each other, the length of at least one of the short sides 250b of a channel 210a may be roughly equal to the length of the opposing short side 250b, or the length of each of the short sides 250b of a channel 210a may be roughly equal to the length of the opposing short side 250b.

A catalyst component is carried on the surfaces of the partition walls 220a and 220b in a channel 210a, on the surfaces of the partition walls 220a and 220b in a channel 210b, and in pores (communication holes) in the partition walls 220a and 220b, and the carried catalyst component forms the catalyst layers 260. The catalyst layers 260 only need to be formed at at least part of the surfaces of the partition walls 220a and 220b and/or the pores in the partition walls 220a and 220b, more specifically, at at least one location on the surfaces of the partition walls 220a and 220b in each of the channels 210a described above, on the surfaces of the partition walls 220a and 220b in each of the channels 210b described above, and in the pores in the partition walls 220a and 220b described above. It is preferable that the catalyst layers 260 are formed on the surfaces of the partition walls 220a and 220b in the channels 210a and in the pores in the partition walls 220a and 220b.

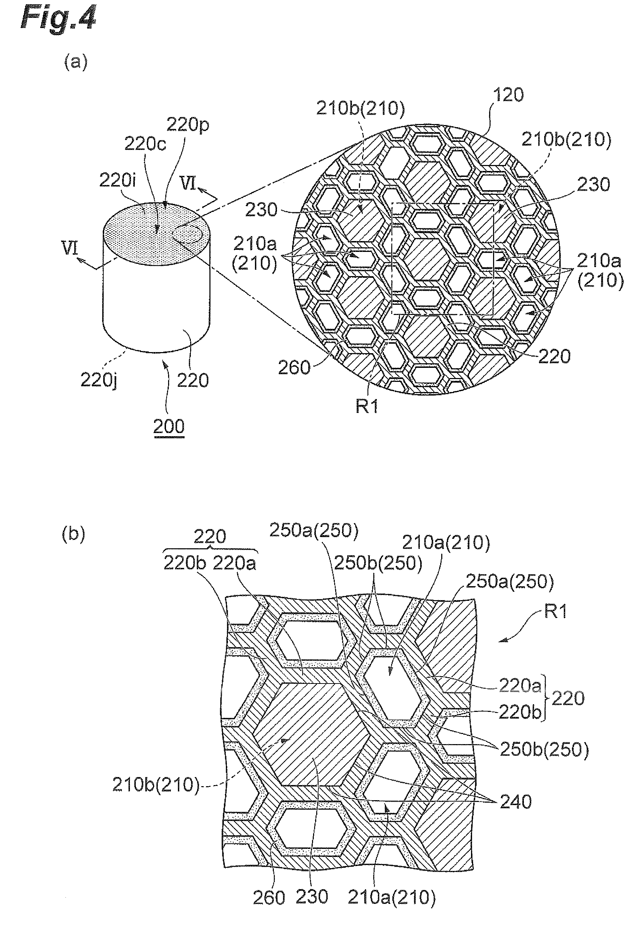

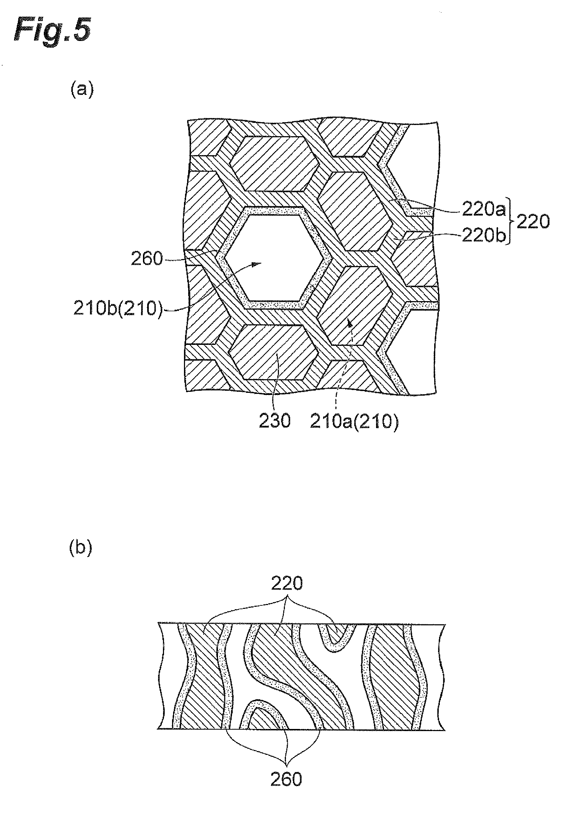

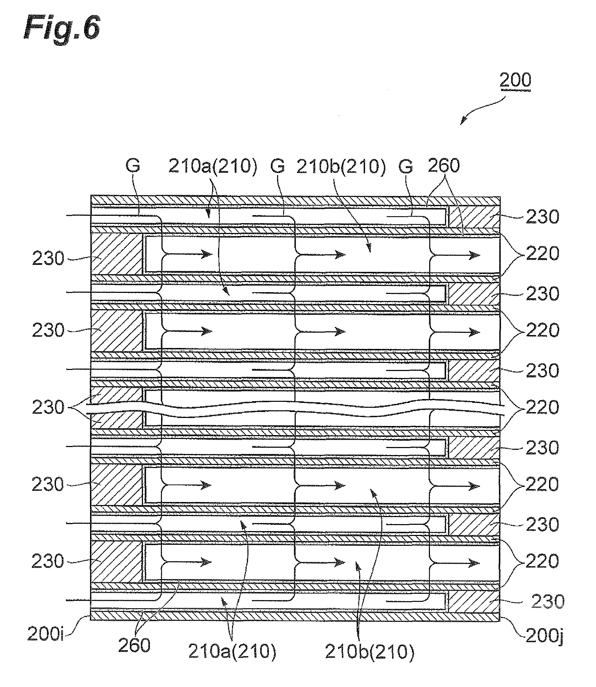

Figure 4(a) diagrammatically shows a diesel particulate filter 200 according to a second embodiment, and Figure 4(b) is an enlarged view of a region R1 in Figure 4(a). Figure 5(a) is an enlarged view of an end surface of the diesel particulate filter 200 shown in Figure 4(a) on the side opposite the side shown in Figure 4(b), and Figure 5(b) is an enlarged view of a cross section of a ceramic honeycomb structure 220. Figure 6 is a cross-sectional view taken along the line VI-VI in Figure 4 and viewed along the arrows. The diesel particulate filter 200 includes a ceramic honeycomb structure 220, which has an end surface on one side (one end surface) 220i, an end surface on the other side (other end surface) 220j, which is located on the side opposite the end surface 220i; and catalyst layers 260, which are carried by the ceramic honeycomb structure 220.

The ceramic honeycomb structure 220 is a circular columnar body having a partition wall structure that forms a plurality of channels 210 extending in parallel to each other. The plurality of channels 210 have a plurality of channels (first channels) 210a and a plurality of channels (second channels) 210b, which are adjacent to the channels 210a. The channels 210a and 210b are perpendicular to the end surfaces 220i and 220j and extend from the end surface 220i to the end surface 220j.

One end of each of the channels 210a, which form part of the channels 210, is open through the end surface 220i, and the other end of each of the channels 210a is closed by a closing portion 230 at the other end surface 220j. One end of each of the channels 210b, which form the remainder of the plurality of channels 210, is closed by a closing portion 230 at the end surface 220i, and the other end of each of the channels 210b is open through the end surface 220j. In the ceramic honeycomb structure 220, for example, the end of each of the channels 210a at the end surface 220i is open as a gas inlet, and the end of each of the channels 210b at the end surface 220j is open as a gas outlet.

Each of the channels 210a and the channels 210b has a hexagonal cross section perpendicular to the axial direction of the channel. The cross section of a channel 210b has, for example, a regular hexagonal shape having sides 240, which form the cross section and are roughly equal to each other in length, but may instead have a shallow hexagonal shape. The cross section of a channel 210a has, for example, a shallow hexagonal shape but may instead have a regular hexagonal shape. The sides facing each other in the cross section of a channel 210a have lengths roughly equal to each other. The cross section of a channel 210a has sides 250, which form the cross-section and are formed of two (a pair of) long sides 250a, which are roughly equal to each other in length, and four (two pairs of) short sides 250b, which are roughly equal to each other in length. The short sides 250b are arranged on both sides of the long sides 250a. The long sides 250a face, in parallel to, each other, and the short sides 250b face, in parallel to, each other.

The ceramic honeycomb structure 220 has partition walls 220a, as portions which separate the channels 210a and the channels 210b from each other. That is, the channels 210a and the channels 210b are adjacent to each other via the partition walls 220a. One channel 210a is disposed between channels 210b adjacent to each other, so that the channels 210a and 210b are alternately arranged in the directions in which the channels 210b are arranged (directions roughly perpendicular to the sides 240).

Each of the sides 240 of a channel 210b faces, in parallel to, a long side 250a of one of the plurality of channels 210a. That is, each of the wall surfaces that form a channel 210b faces, in parallel to, one wall surface that forms a channel 210a along the partition wall 220a located between the channel 210a and the channel 210b. The channels 210 have a configuration unit including one channel 210b and six channels 210a that surround the channel 210b, and in the configuration unit, all the sides 240 of the channel 210b face long sides 250a of the channels 210a. In the ceramic honeycomb structure 220, the length of at least one of the sides 240 of a channel 210b may be roughly equal to the length of the opposing long side 250a, or the length of each of the sides 240 may be roughly equal to the length of the opposing long side 250a.

The ceramic honeycomb structure 220 has a partition wall 220b, which separates channels 210a adjacent to each other. That is, the channels 210a that surround a channel 210b are adjacent to each other via the partition walls 220b.

Each of the short sides 250b of a channel 210a faces, in parallel to, a short side 250b of the adjacent channel 210a. That is, wall surfaces that form the channels 210a face, in parallel to, each other along the partition walls 220b located between the channels 210a adjacent to each other. In the ceramic honeycomb structure 220, between the channels 210a adjacent to each other, the length of at least one of the short sides 250b of a channel 210a may be roughly equal to the length of the opposing short side 250b, or the length of each of the short sides 250b may be roughly equal to the length of the opposing short side 250b.

A catalyst is carried on the surfaces of the partition walls 220a and 220b in a channel 210a, on the surfaces of the partition walls 220a and 220b in a channel 210b, and in pores (communication holes) in the partition walls 220a and 220b, and the carried catalyst forms the catalyst layers 260. The catalyst layers 260 only need to be formed at at least part of the surfaces of the partition walls 220a and 220b and/or the pores in the partition walls 220a and 220b, more specifically, at at least one location on the surfaces of the partition walls 220a and 220b in each of the channels 210a described above, on the surfaces of the partition walls 220a and 220b in each of the channels 210b described above, and in the pores in the partition walls 220a and 220b described above. It is preferable that the catalyst layers 260 are formed on the surfaces of the partition walls 220a and 220b in the channels 210a and in the pores in the partition walls 220a and 220b.

In the first and second embodiments, the length of the ceramic honeycomb structure 220 in the axial direction of the channels ranges, for example, from 50 to 300 mm. The outer diameter of the ceramic honeycomb structure 220 ranges, for example, from 50 to 250 mm. In the ceramic honeycomb structure 220, the length of the sides 240 ranges, for example, from 0.4 to 2.0 mm. The length of the long sides 250a ranges, for example, from 0.4 to 2.0 mm. The length of the short sides 250b ranges, for example, from 0.3 to 2.0 mm. The thickness of the partition walls 220a and 220b (cell wall thickness) ranges, for example, from 0.1 to 0.8 mm. The cell density in the ceramic honeycomb structure 220 (for example, total density of the channels 210a and the channels 210b at the end surface 220i in the ceramic honeycomb structure) preferably ranges from 50 to 600 cpsi, more preferably from 100 to 500 cpsi.

In the ceramic honeycomb structure 220, it is preferable that the sum of opening areas of the plurality of channels 210a at the end surface 220i is greater than the sum of opening areas of the channels 210b at the end surface 220j.

It is preferable that the hydraulic diameter of each of the channels 210a at the end surface 220i is smaller than or equal to 1.4 mm from a viewpoint of ease of pressure loss change according to the amount of deposit of captured objects. The hydraulic diameter of each of the channels 210a is preferably greater than or equal to 0.5 mm, more preferably greater than or equal to 0.7 mm from a viewpoint of further suppression of deposition of captured objects in an end-surface-side area in each of the channels.

It is preferable that the hydraulic diameter of each of the channels 210b at the end surface 220j is greater than the hydraulic diameter of each of the channels 210a at the end surface 220i. That is, it is preferable that the cross-sectional area of each of the channels 210a is smaller than the cross-sectional area of each of the channels 210b. The hydraulic diameter of each of the channels 210b at the end surface 220j is preferably smaller than or equal to 1.7 mm, more preferably smaller than or equal to 1.6 mm from the viewpoint of further ease of pressure loss change according to the amount of deposit of captured objects. The hydraulic diameter of each of the channels 210b is preferably greater than or equal to 0.5, more preferably greater than or equal to 0.7 mm from the viewpoint of further suppression of deposition of captured objects in an end-surface-side area in each of the channels.

The ceramic honeycomb structure 220 described above is porous and contains, for example, a porous ceramic sintered body. The partition walls have a structure that allows transmission of fluid. Specifically, a large number of communication holes (flow passages) through which fluid is allowed to pass are formed in the partition walls.

The porosity of the partition walls of the ceramic honeycomb structure 220 is preferably greater than or equal to 30 vol%, more preferably greater than or equal to 40 vol%, still more preferably greater than or equal to 50 vol% from a viewpoint of further improvement in soot capturing efficiency and further reduction in pressure loss. The porosity of the partition walls is preferably smaller than or equal to 80 vol%, more preferably smaller than or equal to 70 vol%. The average diameter of the pores in the partition walls is preferably greater than or equal to 5 $\mu$m, more preferably greater than or equal to 10 $\mu$m from the viewpoint of further improvement in soot capturing efficiency and further reduction in pressure loss. The average diameter of the pores in the partition walls is preferably smaller than or equal to 30 $\mu$m, more preferably smaller than or equal to 25 $\mu$m. The porosity and average pore diameter in the partition walls can be adjusted by changing the particulate diameter of a raw material, the amount of pore-forming material to be added, the type of the pore-forming material, and firing conditions and can be measured by using a mercury penetration method.

The material of the ceramic honeycomb structure 220 is not limited to a specific material, but it is preferable that the ceramic honeycomb structure 220 contains an aluminum titanate as the major component. In this case, the ceramic honeycomb structure 220 can further contain magnesium and/or silica. The ceramic honeycomb structure 220 can instead contain cordierite or silicon carbide as the major component.

When the ceramic honeycomb structure is made of an aluminum titanate, the composition formula thereof is, for example, $Al_{2(1-x)}Mg_xTi_{(1+y)}O_5$, and the value x satisfies $0 < x < 1$. It is preferable that x satisfies $0.03 \leq x \leq 0.5$, and it is more preferable that x satisfies $0.05 \leq x \leq 0.2$. The value y described above satisfies $0.5x < y < 3x$. It is preferable that the value y satisfies $0.5x < y < 2x$, and it is more preferable that the value y satisfies $0.7x < y < 2x$. The material is allowed to contain trace components that originate from the raw material or trace components inevitably introduced in manufacturing steps. Examples of the trace components include $Na_2O$, $K_2O$, $P_2O_5$, and CaO.

When the aluminum titanate further contains silicon, the material may contain a glass phase that originates from silicon source powder. The glass phase refers to an amorphous phase containing $SiO_2$ as the major component. In this case, it is preferable that the content of the glass phase 4 mass% or lower. When the content of the glass phase is lower than or equal to 4 mass%, an aluminum-titanate-based ceramic sintered body that satisfies pore characteristics required for a ceramic filter, such as a particulate filter, is readily produced. It is preferable that the content of the glass phase is higher than or equal to 2 mass%.

The thermal conductivity of the ceramic honeycomb structure can be 3 W/mK or lower, and the heat capacity of the ceramic honeycomb structure can be 0.75 J/gK or higher. In this case, the temperature of the filter is unlikely to lower in the regeneration after the soot is ignited, whereby it is easy to ignite soot, keep burning the soot, and increase the amount of removed soot in the regeneration. The thermal conductivity is preferably lower than or equal to 2.0 W/mK, more preferably lower than or equal to 1.50 W/mK. The lower limit of the thermal conductivity is preferably 0.05 W/mK. The upper limit of the heat capacity is preferably 2.00 J/gK, more preferably 1.50 J/gK. An example of a ceramic material that can provide the thermal conductivity and the heat capacity that satisfy the ranges described above is an aluminum-titanate-based ceramic material.

(Catalyst layers)

(Noble metal particulates)

The catalyst layers 260 contain noble metal particulates. Examples of the noble metal include platinum, palladium, rhodium, gold, silver, copper, iridium, ruthenium, and osmium. Preferable examples of the noble metal are platinum and palladium. The particulate diameter of the noble metal particulates is not limited to a specific value and can be a value ranging from 5 to 50 nm. The noble metal particulates function as a catalyst that facilitates burning of captured soot. To facilitate the soot burning reaction, a trace amount of metal element other than a noble metal may be added.

The total surface area of the noble metal particulates carried by the entire ceramic honeycomb structure 220 is preferably greater than or equal to 5 $m^2$/L per apparent unit volume of the ceramic honeycomb structure 220 but smaller than or equal to 110 $m^2$/L, more preferably greater than or equal to 12.5 $m^2$/L. The "apparent volume" means the volume that is the sum of the space in the channels, the partition walls, and the closing portions of the ceramic honeycomb structure. In the present specification, the total surface area of the noble metal particulates and the amount of solid acid contained in the apparent unit volume are given by converting the surface area of the noble metal particulates and the amount of solid acid contained in the volume described above into per 1L volume.

The total surface area of the noble metal particulates can be calculated by determining the amount of adsorption of carbon monoxide and using the amount of adsorption of carbon monoxide and the adsorption area occupied by a carbon monoxide molecule. The amount of adsorption of carbon monoxide may specifically be determined by employing a pulse injection method.

In the pulse injection method, for example, a sample is pre-processed in advance as follows: The sample is first heated from room temperature to 400°C over 10 minutes in a hydrogen atmosphere; the sample is then held at 400°C for 15 minutes in the hydrogen atmosphere; and the atmosphere is switched to a helium atmosphere and the sample is held at 400°C for another 15 minutes. The sample is then cooled to 50°C over 10 minutes in the helium atmosphere. A quantified amount of CO is then sequentially supplied in the form of pulses at 50°C. The gas flow rate is set at 50 mL/min. The amount of CO in the exhaust gas may then be measured by using a TCD or any other sensor to measure the amount of adsorption of CO.

Specifically, BEL-METAL-3SP manufactured by BEL JAPAN, Inc. can, for example, be used.

In the present embodiment, the following expression is satisfied:

$$2 \text{ m}^2/\text{L} \leq \text{SPout} - \text{SPcent} \leq 125 \text{ m}^2/\text{L}$$

where SPcent represents the total surface area of the noble metal particulates contained in the apparent unit volume in the central portion 220c of the ceramic honeycomb structure 220, and SPout represents the total surface area of the noble metal particulates contained in the apparent unit volume in the peripheral portion 220p of the ceramic honeycomb structure 220.

When SPout - SPcent falls within the above range, burning of soot in the peripheral portion 220p of the diesel particulate filter is appropriately facilitated as compared with the burning of soot in the central portion 220c, whereby the difference in soot burning between the central portion 220c and the peripheral portion 220p can be reduced. When SPout - SPcent is too low, the effect of reduction in the difference in soot burning decreases. On the other hand, when SPout - SPcent is too high, the soot burning is facilitated too much in the peripheral portion 220p, and the temperature of the peripheral portion rises by a greater amount than in the central portion 220c in some cases.

From a viewpoint of more reduction in the difference in soot burning, it is preferable that SPout - SPcent is greater than or equal to 4 m2/L, more preferable that SPout - SPcent is greater than or equal to 6 m2/L, still more preferable that SPout - SPcent is greater than or equal to 50 m2/L. From the same viewpoint, it is preferable that SPout - SPcent is smaller than or equal to 115 m2/L, more preferable that SPout - SPcent is smaller than or equal to 100 m2/L, still more preferable that SPout - SPcent is smaller than or equal to 75 m2/g.

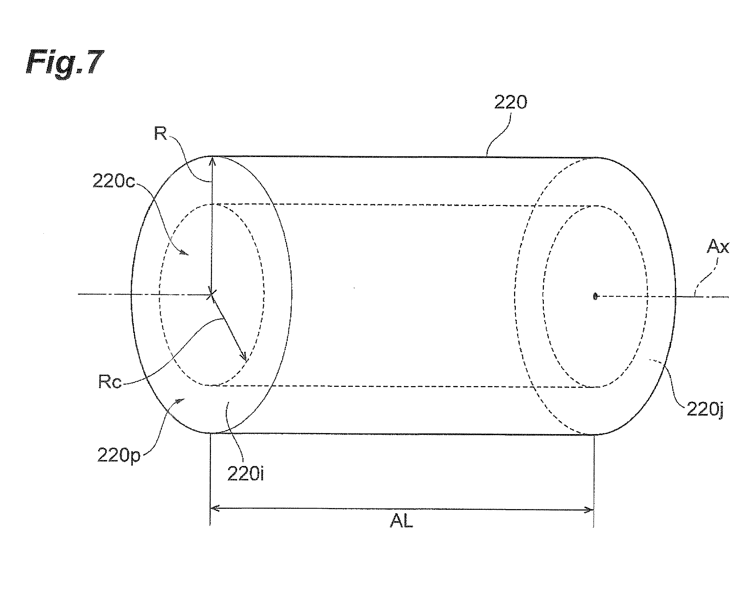

In the present embodiment, the central portion 220c is an interior region of the ceramic honeycomb structure 220 when the ceramic honeycomb structure 220 has a circular columnar shape having a radius R of opposite end surfaces and an axial length AL, and the central portion 220 shares the end surfaces and the central axis Ax with the ceramic honeycomb structure 220, as shown in Figure 7. On the other hand, the peripheral portion 220p is a region outside the central portion 220c. The radius Rc of the end surfaces of the central portion 220c is typically at least 50% of the radius R of the end surfaces (220i and 220j) of the ceramic honeycomb structure, preferably greater than or equal to 70% but smaller than or equal to 95%, more preferably greater than or equal to 75% but smaller than or equal to 90%. When the radius Rc of the end surfaces of the central portion 220c is 70% of the radius R of the end surfaces (220i and 220j) of the ceramic honeycomb structure 220, the central portion 220c and the peripheral portion 220p have roughly the same volume. The preferable range of the radius Rc of the end surfaces of the central portion 220c derives the following relationship between the volume Vc of the central portion 220c and the volume Vp of the peripheral portion 220p: Vc ≥ Vp.

The shape of the end surfaces of the central portion 220c is not limited to a specific shape as long as the preferable relationship of the volume between the central portion 220c and the peripheral portion 220p (Vc ≥ Vp) is satisfied and can be an elliptical shape, a rectangular shape, or any other shape. In this case, the central axis Ax of the ceramic honeycomb structure 220 is a line passing through the centers of gravity of the end surfaces of the central portion 220c.

When the ceramic honeycomb structure 220 is an elliptical column, a polygonal column, or any other non-circular columnar body, the region of the central portion 220c may also be so determined that the preferable relationship of the volume between the central portion 220c and the peripheral portion 220p (Vc ≥ Vp) is satisfied. Specifically, the shape of the end surfaces of the central portion 220c can be similar to the shape of the end surfaces of the ceramic honeycomb structure 220 but may instead be a non-similar shape. For example, when the ceramic honeycomb structure 220 can be an elliptical column or a rectangular column, the end surfaces of the central portion can also have an elliptical shape or a rectangular shape but may, for example, have a circular shape. The central axis Ax of the ceramic honeycomb structure 220 only needs to pass the centers of gravity of the end surfaces of the central portion 220c.

The total surface area of the noble metal particulates in the central portion 220c may be zero, but the central portion 220c can carry noble metal particulates to some extent from a viewpoint of facilitation of soot burning in the central portion 220c. For example, it is preferable that the total surface area of the noble metal particulates carried by the central portion 220c ranges from 2.5 to 50 $m^2$/L.

The amount of noble metal particulates carried by the filter only needs to satisfy the surface area condition described above. For example, the amount of noble metal particulates carried by the entire filter can range from 0.4 to 5 g/L.

(Solid acid catalyst)

The catalyst layers 260 preferably further contain a solid acid component. Examples of the solid acid component include $\gamma$ alumina, $\theta$ alumina, $\delta$ alumina, $\chi$ alumina, $\eta$ alumina, zeolite, ceria, and a cerium zirconium oxide. The solid acid component can be a mixture of any of them. In particular, $\gamma$ alumina is preferable. It is preferable to use boehmite as the raw material of $\gamma$ alumina because $\gamma$ alumina coexists with partially left boehmite and the amount of solid acid is therefore increased. Example of the solid acid include Broensted acid and Lewis acid, and Lewis acid, which has a smaller number of acidic hydroxy group, is preferable.

It is preferable that the amount of solid acid carried by the entire ceramic honeycomb structure 220 ranges from 1.0 to 10 mmol/L per apparent unit volume of the ceramic honeycomb structure 220.

Since 1 molar of solid acid site adsorbs 1 molar of ammonia, the amount of solid acid can be measured by using an ammonia adsorption method. Specifically, a sample is put in a measurement cell used with a temperature-programmed desorption apparatus, heated from room temperature to 500°C at a speed of 10°C/min in the flow of helium (50 mL/min), held at 500°C for 1 hour, and cooled to 100°C. The sample is then held at 100°C in a helium gas containing 0.5 vol% of $NH_3$ (100 mL/min) for 30 minutes to adsorb the $NH_3$. The sample is then held at 100°C in the helium gas (50 mL/min) for 30 minutes for removal of the $NH_3$ in the gas. The sample is then heated from 100°C to 800°C at the speed of 10°C/min in the flow of helium (50 mL/min), and the amount of $NH_3$ that desorbs may be detected with a quadrupole mass spectrometer. More specifically, a fully automatic temperature-programmed desorption spectrometer apparatus TPD-1-ATW manufactured by BEL JAPAN, Inc. or any other apparatus can be used.

In the present embodiment, the following expression is satisfied:

$$1.0 \ \mathrm{mmol/L} \leq \mathrm{SAout} - \mathrm{SAcent} \leq 12.0 \ \mathrm{mmol/L}$$

where SAcent represents the amount of solid acid contained in the apparent unit volume in the central portion 220c of the ceramic honeycomb structure 220, and SAout represents the amount of solid acid contained in the apparent unit volume in the peripheral portion 220p of the ceramic honeycomb structure 220.

The solid acid component adsorbs hydrocarbon and other substances in exhaust gas and allows them to be burned right away. Therefore, when SAout - SAcent satisfies the range described above, soot burning in the peripheral portion of the diesel particulate filter is further appropriately facilitated than in the central portion, whereby the difference in soot burning between the central portion and the peripheral portion can be reduced. When SAout - SAcent is too low, the effect of reduction in the difference in soot burning decreases. When SAout - SAcent is too high, the temperature of the peripheral portion rises by a greater amount than in the central portion in some cases.

From a viewpoint of suppression of the difference in the soot burning, it is preferable that SAout - SAcent is greater than or equal to 1.5 mmol/L, more preferable that SAout - SAcent is greater than or equal to 2.0 mmol/L, still more preferable that SAout - SAcent is greater than or equal to 3.0 mmol/L. From the same viewpoint, it is preferable that SAout - SAcent is smaller than or equal to 10.0 mmol/L, more preferable that SAout - SAcent is smaller than or equal to 9.0 mmol/L, still more preferable that SAout - SAcent is smaller than or equal to 8.0 mmol/L and can even be smaller than or equal to 6.0 mmol/L.

The amount of solid acid in the central portion 220c of the ceramic honeycomb structure 220 may be zero, but the central portion 220c can carry a solid acid to some extent from a viewpoint of facilitation of soot burning in the central portion 220c. For example, it is preferable that the amount of solid acid carried by the central portion 220c ranges from 1.2 to 7.0 mmol/L.

The amount of solid acid carried by the filter only needs to satisfy the surface area condition described above. For example, when the solid acid is $\gamma$ alumina, the amount of solid acid carried by the ceramic honeycomb structure 220 can range from 10 to 50 g/L, the amount of noble metal particulates carried by the central portion 220c can range from 0.1 to 2 g/L, and the amount of noble metal particulates carried by the peripheral portion 220p can range from 0.4 to 5 g/L.

The ceramic honeycomb structure 220 captures soot and other objects to be captured contained in exhaust gas from a diesel engine, a gasoline engine, and other internal combustion engines. For example, in the ceramic honeycomb structure 220, gas G supplied through the end surface 220i into the channels 210a passes through the communication holes in the catalyst layers 260 and the ceramic honeycomb structure 220, reaches the adjacent channels 210b, and exits through the end surface 220j, as shown in Figures 3 and 6.

In a regenerating step of burning captured soot, the amount of burnable gas in the gas is increased to increase the temperature of the exhaust gas for burning of the soot. In this process, the noble metal particulates function as a catalyst for soot burning. Further, the solid acid catalyst component adsorbs and burns hydrocarbon and other substances in the exhaust gas to assist the soot burning.

In the present embodiment, since the total surface area of the noble metal particulates is so set as to differ by a predetermined amount between the central portion and the peripheral portion of the ceramic honeycomb structure, the burning in the peripheral portion is facilitated as compared with in the central portion, whereby the uniformity of the soot burning is increased. As a result, the soot burning efficiency is increased, and a situation in which thermal stress induced between the inner portion and the peripheral portion causes cracking can be suppressed. Further, when a predetermined difference in the amount of solid acid is also created between the central portion and the peripheral portion, soot tends to be burned further uniformly.

The diesel particulate filter according to the present invention is not limited to the embodiments described above and can be implemented in a variety of variation aspects.

For example, the ceramic honeycomb structure 220 may be so shaped that the cross section of each of the first channels (channels 210a) perpendicular to the axial direction thereof has the first sides (long sides 250a) and the second sides (short sides 250b) arranged on opposite sides of the first sides, and that the sides (sides 240) that form the cross sections of the second channels (channels 210b) perpendicular to the axial direction thereof face the first sides of the first channels and the second sides of the first channels face the second sides of adjacent first channels, as in the two ceramic honeycomb structures 220 described above, but the shape of the ceramic honeycomb structure 220 is not necessarily limited to the shape described above.

Further, a channel in the ceramic honeycomb structure 220 does not necessarily have a hexagonal cross section perpendicular to the axial direction of the channel and may have a triangular shape, a rectangular shape, an octagonal shape, a circular shape, or an elliptical shape. Moreover, each of the channels may have a curved contour. Further, the channels may be a mixture of channels having different cross sectional areas and a mixture of channels having different cross-sectional shapes. For example, the cross-sectional area of each of the first channels can be greater or smaller than the cross-sectional area of each of the second channels. The arrangement of the channels is not limited to a specific arrangement, and the arrangement of the central axes of the channels may be an equilateral triangular arrangement, in which the central axes are arranged at the vertices of equilateral triangles, or a staggered arrangement. Further, the ceramic honeycomb structure 220 is not limited to a circular columnar body and may, for example, be an elliptical column, a triangular column, a rectangular column, a hexagonal column, or an octagonal column.

<Method for manufacturing diesel particulate filter>

The closed ceramic honeycomb structure 220 described above is first prepared by using a known method. The ceramic honeycomb structure 220 is subsequently provided with the catalyst layers 260.

To provide the catalyst layer 260, a variety of known methods are applicable. For example, a catalyst component or slurry containing a raw material of the catalyst component may be applied onto the ceramic honeycomb structure 220 and dried. The slurry contains, for example, a solid acid component, a raw material of noble metal particulates, a thickening agent, and a solvent such as water. Examples of the raw material of noble metal particulates include noble metal particulates, an inorganic noble metal compound (chloroplatinic acid, for example), and an organic noble metal compound (dinitrodiammine platinum, for example). When an organic noble metal compound is used, the slurry can be baked as required after the application at a temperature, for example, ranging from about 500 to 700°C.

In the present embodiment, the central portion 220c and the peripheral portion 220p of the ceramic honeycomb structure 220 are configured to differ from each other in terms of volumetric density of the total surface area of the noble metal particulates as described above. The central portion 220c and the peripheral portion 220p of the ceramic honeycomb structure 220 are preferably further configured to differ from each other in terms of volumetric density of the amount of solid acid.

A method for configuring the central portion 220c and the peripheral portion 220p to differ from each other in terms of the total surface area of the noble metal particulates and/or the amount of solid acid is not limited to a specific method. The difference can be achieved, for example, by applying the slurry only onto the peripheral portion of the ceramic honeycomb structure or applying different types of slurry onto the central portion 220c and the peripheral portion 220p.

The total surface area of the noble metal particulates can be changed by changing the concentration of the raw material of the noble metal particulates in the slurry, the type of the raw material of the noble metal particulates, pH of the slurry, the drying conditions, the baking conditions (temperature at which organic noble metal compound is decomposed), and other factors.

The embodiments described above relate to a diesel particulate filter for processing exhaust gas from a diesel engine and a method for manufacturing the diesel particulate filter and are also applicable to a particulate filter for processing exhaust gas from a gasoline engine or any of a variety of other internal combustion engines and a method for manufacturing the particulate filter.

**Examples**

(Example 1)

An aluminum-titanate-based ceramic honeycomb structure (having a circular columnar shape having a radius of 72 mm and a length of 152 mm) was prepared. The ceramic honeycomb structure had the cell structure according to the first embodiment and Figure 1. The ceramic honeycomb structure contained 0.03 mass% of $Na_2O$, 0.03 mass% of $K_2O$, 0.03 mass% of CaO, and 0.15 mass% of $P_2O_5$ as trace component. The cell density was 333 cpsi.

Slurry containing a catalyst component was then applied onto the ceramic honeycomb structure by using a washcoat method and then dried. The slurry was produced by crushing a solid acid source and $\gamma$ alumina (PURALOX SCFal40/L3 manufactured by Sasol Limited), the latter of which serves as a support material, to form particulates having a particulate diameter D50 of 5.28 $\mu$m, which were mixed with a Pt source as the catalyst metal (dinitrodiammine platinum nitric acid solution manufactured by Tanaka Kikinzoku Kogyo), citric acid as a chelating agent, and a thickening agent (hydroxyethyl cellulose) (the mixture had 9 mass% of a solid content, pH of 6.18, and a viscosity of 600 cps). In Example 1, the slurry was applied only onto the peripheral portion (portion outside a radius of 50.8 mm) of the ceramic honeycomb structure by using a washcoat method to form catalyst layers, which was then dried. At the time of washcoating, the end surfaces of the central portion of the ceramic honeycomb structure were covered with jigs for the formation of the catalyst layers only on the peripheral portion. In the present example, the slurry was applied onto and impregnated into the partition walls from both sides of the inlet-side channels and the outlet-side channels. The size of the portion where the catalyst layers were formed, that is, the size of the peripheral portion was about half of the apparent volume of the ceramic honeycomb structure. The amount of carried Pt and the surface area measured by using a pulse injection method using carbon monoxide were used to determine SPout and SPcent, and SPout - SPcent was further determined. Further, the amount of carried $\gamma$ alumina and an ammonia adsorption/desorption method were used to determine SAout and SAcent, and SAout - SAcent was further determined.

Further, samples each having a diameter of 10 mm and a thickness of 0.29 mm were cut off a base block made of the same ceramic material as that of the ceramic honeycomb structure described above but having no channels, and the samples were heat treated at 900°C for 30 minutes for dirt removal. Thereafter, three of the samples were layered on each other, and the thermal conductivity and the heat capacity thereof were measured by using a laser flash method and found to be 0.56 W/mK and 0.77 J/gK, respectively.

(Example 2)

Example 2 was the same as Example 1 except that the washcoating was performed only on the inlet-side channels, and the application and the impregnation were performed on the partition walls on the peripheral side of the inlet-side channels.

(Example 3)

Example 3 was the same as Example 1 except that the concentration of $\gamma$ alumina in the slurry was approximately doubled.

(Example 4)

Example 4 was the same as Example 1 except that the concentration of the Pt source in the slurry was approximately doubled.

(Example 5)

Example 5 was the same as Example 1 except that the aluminum-titanate-based ceramic honeycomb structure was replaced with an SiC-based ceramic honeycomb structure (catalyst was coated all over the structure). The thermal conductivity and the heat capacity of the ceramic honeycomb structure were measured and found to be 19 W/mK and 0.71 J/gK, respectively.

(Comparative Example 1)

Comparative Example 1 was the same as Example 1 except that the end surfaces of a ceramic honeycomb structure were not covered with jigs at the time of washcoating, and catalyst layers were uniformly formed all over the ceramic honeycomb structure.

(Evaluation)

Soot was deposited on each of the filters under the following conditions: The soot generation speed was 10 g/h; the gas flow rate was 250 kg/h; and the gas temperature was 240°C. As a result, 6 g/L of soot was deposited on each of the filters. After the soot deposition, the soot was burned with a gas flow rate of about 105 kg/h and a gas temperature of about 680°C maintained for 510 seconds. Changes in the temperature of the filers in the regeneration (burning) were measured at two locations, a central portion and a peripheral portion on the downstream side. The central portion on the downstream side was located on the central axis of the filter and in a position shifted from the outlet-side end surface of the filter by 25 mm in the axial direction, and the peripheral portion on the downstream side was located in a position shifted from the central axis of the filter by 70 mm in the radial direction and shifted from the outlet-side end surface of the filter by 25 mm in the axial direction. A maximum temperature in the central portion on the downstream side and the temperature in the peripheral portion on the downstream side at the time of the maximum temperature were measured, and the temperature difference was determined from these temperatures. Further, the maximum temperature in the central portion on the downstream side and the temperature 6 minutes after the maximum temperature was reached were used to measure an average temperature drop rate for 6 minutes from the maximum temperature in the central portion on the downstream side.
Table 1 shows a result of the procedure described above.

[Table 1]

| | | Example 1 | Example 2 | Example 3 | Example 4 | Example 5 | Comparative Example 1 |
|---|---|---|---|---|---|---|---|
| Honeycomb structure | | AT | AT | AT | AT | SiC | AT |
| Form of catalyst layers | | Only in peripheral portion | Only in peripheral portion (impregnation only from inlet-side channels) | Only in peripheral portion | Only in peripheral portion | Only in peripheral portion | Entire structure |
| Surface area of noble metal | SPout - SPcent ($m^2$/L) | 57 | 56 | 54.9 | 112.9 | 59.7 | 0 |
| Amount of solid acid | SAout - SAcent (mmol/L) | 3.85 | 3.78 | 7.41 | 3.81 | 4.03 | 0 |
| Temperature when temperature in central portion is maximize d, and temperature difference | Central portion (°C) | 768 | 754 | 765 | 761 | 840 | 861 |
| | Peripheral portion (°C) | 464 | 466 | 458 | 474 | 528 | 471 |
| | Temperature difference (°C) | 304 | 288 | 307 | 287 | 312 | 390 |
| average temperature drop rate for 6 minutes after the maximum temperature in central portion (°C/min) | | 97 | 95 | 96 | 96 | 108 | 112 |

It is ascertained that in Examples 1 to 5, the difference in peak temperature between the central portion and the peripheral portion decreases, as compared with Comparative Example 1.

**Reference Signs List**

200: Diesel particulate filter (particulate filter), 210: Channel, 210a: Channel (first channel), 210b: Channel (second channel), 220: Ceramic honeycomb structure, 220i: End surface (one end surface), 220j: End surface (other end surface), 220c: Central portion, 220p: Peripheral portion, 260: Catalyst layer, R: Radius of end surface of ceramic honeycomb structure 220, Rc: Radius of end surface of central portion 220c, AL: Axial length of ceramic honeycomb structure 220, Ax: Central axis of ceramic honeycomb structure 220.

**Claims**

1. A particulate filter comprising:

   a columnar ceramic honeycomb structure having a plurality of first channels and a plurality of second channels; and
   a catalyst component carried by the ceramic honeycomb structure,
   wherein the plurality of first channels extend in an axial direction of the ceramic honeycomb structure, are open through one end surface of the ceramic honeycomb structure and are closed at another end surface thereof,
   the plurality of second channels extend in the axial direction of the ceramic honeycomb structure, are open through the other end surface and are closed at the one end surface,
   the catalyst component contains noble metal particulates, and
   the following expression is satisfied:

$$2 \text{ m}^2/\text{L} \leq \text{SPout} - \text{SPcent} \leq 125 \text{ m}^2/\text{L}$$

   where SPcent represents a total surface area of the noble metal particulates contained in an apparent unit volume of a central portion of the ceramic honeycomb structure, and SPout represents the total surface area of the noble metal particulates contained in the apparent unit volume of a peripheral portion of the ceramic honeycomb structure.

2. The particulate filter according to claim 1,
   wherein the catalyst component further contains a solid acid component, and the following expression is satisfied:

$$1.0 \text{ mmol/L} \leq \text{SAout} - \text{SAcent} \leq 12.0 \text{ mmol/L}$$

   where SAcent represents an amount of solid acid contained in the apparent unit volume of the central portion of the ceramic honeycomb structure, and SAout represents the amount of solid acid contained in the apparent unit volume of the peripheral portion of the ceramic honeycomb structure.

3. The particulate filter according to claim 2,
   wherein the ceramic honeycomb structure contains an aluminum titanate as major component, and the solid acid component contains alumina as major component.

4. The particulate filter according to any one of claims 1 to 3,
   wherein a thermal conductivity of the ceramic honeycomb structure is less than or equal to 3 W/mK, and a heat capacity of the ceramic honeycomb structure is greater than or equal to 0.75 J/gK.

5. The particulate filter according to any one of claims 1 to 4,
   wherein each of the first channels has a hexagonal cross section.

**6.** The particulate filter according to any one of claims 1 to 5,
wherein a cross-sectional area of each of the first channels is smaller than the cross-sectional area of each of the
second channels.

. . .

# Fig.1

(a)

(b)

# *Fig.2*

(a)

(b)

# Fig.3

# *Fig.4*

(a)

(b)

## Fig.5

(a)

(b)

# Fig.6

EP 3 037 168 A1

*Fig.7*

## INTERNATIONAL SEARCH REPORT

International application No.

PCT/JP2014/071780

| A. CLASSIFICATION OF SUBJECT MATTER |
|---|
| *B01J35/04*(2006.01)i, *B01D39/20*(2006.01)i, *B01D53/86*(2006.01)i, *B01D53/94* (2006.01)i, *B01J23/42*(2006.01)i, *F01N3/022*(2006.01)i, *F01N3/023*(2006.01)i, *F01N3/035*(2006.01)i, *F01N3/28*(2006.01)i |
| According to International Patent Classification (IPC) or to both national classification and IPC |

| B. FIELDS SEARCHED |
|---|
| Minimum documentation searched (classification system followed by classification symbols) |
| B01J35/04, B01D39/20, B01D53/86, B01D53/94, B01J23/42, F01N3/022, F01N3/023, F01N3/035, F01N3/28 |

| Documentation searched other than minimum documentation to the extent that such documents are included in the fields searched |
|---|
| Jitsuyo Shinan Koho 1922–1996 Jitsuyo Shinan Toroku Koho 1996–2014<br>Kokai Jitsuyo Shinan Koho 1971–2014 Toroku Jitsuyo Shinan Koho 1994–2014 |

| Electronic data base consulted during the international search (name of data base and, where practicable, search terms used) |
|---|
| JSTPlus(JDreamIII), JST7580(JDreamIII), JSTChina(JDreamIII) |

### C. DOCUMENTS CONSIDERED TO BE RELEVANT

| Category* | Citation of document, with indication, where appropriate, of the relevant passages | Relevant to claim No. |
|---|---|---|
| X<br>A | JP 2006-088027 A (Mazda Motor Corp.),<br>06 April 2006 (06.04.2006),<br>claim 1; paragraphs [0006] to [0011], [0031] to [0033]; examples 1, 4; drawings<br>(Family: none) | 1,4-6<br>2,3 |
| X | JP 2004-251138 A (Mazda Motor Corp.),<br>09 September 2004 (09.09.2004),<br>claims; paragraphs [0028], [0029], [0054] to [0063]; drawings<br>(Family: none) | 1-6 |
| X<br>A | JP 2008-229459 A (Toyota Motor Corp.),<br>02 October 2008 (02.10.2008),<br>claims; paragraphs [0010] to [0026]; examples; drawings<br>(Family: none) | 1,4-6<br>2,3 |

|  |  |
|---|---|
| ☒ Further documents are listed in the continuation of Box C. | ☐ See patent family annex. |

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>17 November, 2014 (17.11.14) | Date of mailing of the international search report<br>02 December, 2014 (02.12.14) |
|---|---|
| Name and mailing address of the ISA/<br>Japanese Patent Office | Authorized officer |
| Facsimile No. | Telephone No. |

Form PCT/ISA/210 (second sheet) (July 2009)

## INTERNATIONAL SEARCH REPORT

International application No.

PCT/JP2014/071780

C (Continuation). DOCUMENTS CONSIDERED TO BE RELEVANT

| Category* | Citation of document, with indication, where appropriate, of the relevant passages | Relevant to claim No. |
|---|---|---|
| A | WO 2010/113586 A1 (NGK Insulators, Ltd.), 07 October 2010 (07.10.2010), & US 2012/0017554 A1 & EP 2415510 A1 | 1-6 |
| P,X | JP 2013-166121 A (Ibiden Co., Ltd.), 29 August 2013 (29.08.2013), claims; paragraphs [0005] to [0016], [0018] to [0097]; examples; drawings (Family: none) | 1-6 |

Form PCT/ISA/210 (continuation of second sheet) (July 2009)

**EP 3 037 168 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009537741 A